Europäisches Patentamt

European Patent Office

Office européen des brevets

(11) Publication number: **0 220 348**
B1

# (12) EUROPEAN PATENT SPECIFICATION

(45) Date of publication of the patent specification:
06.06.90

(21) Application number: **85307593.5**

(22) Date of filing: **21.10.85**

(51) Int. Cl.⁵: **A01G 9/14**, A01G 31/02

54 Conveyor apparatus for watering plants.

<table>
<tr><td>(43) Date of publication of application:<br>06.05.87 Bulletin 87/19</td><td>(73) Proprietor: <b>Van Wingerden, Arie, Rural Rte.<br>Nr. 1 Box 37A, Pipersville Pennsylvania 18947(US)</b></td></tr>
<tr><td>(45) Publication of the grant of the patent:<br>06.06.90 Bulletin 90/23</td><td>(72) Inventor: <b>Van Wingerden, Arie, Rural Rte. Nr. 1 Box 37A,<br>Pipersville Pennsylvania 18947(US)</b></td></tr>
<tr><td>(84) Designated Contracting States:<br>AT BE CH DE FR GB IT LI LU NL SE</td><td>(74) Representative: <b>Shaw, Laurence, George House George<br>Road, Edgbaston Birmingham B15 1PG(GB)</b></td></tr>
<tr><td>(56) References cited:<br>GB-A- 1 160 512<br>US-A- 2 244 677<br>US-A- 3 318 442<br>US-A- 3 529 379</td><td></td></tr>
</table>

## Description

The invention relates to a conveyor system especially for use in carrying plants in pots, particularly but not exclusively houseplants, to a watering station such that each plant receives uniform watering and illumination. In this way a crop of plants may be grown to reach a marketable state at substantially the same time.

Such apparatus is known from US-A 2 244 677. In the arrangement disclosed, a plurality of plant pots are hung from a hook attached to an endless chain which is driven by cog wheels to move the plant pots about a greenhouse. The hook is arranged to contact the actuator of a tap connected to a water pipe so that the plants are watered each time the plant pots pass by the tap. The tap is actuated irrespective of whether a plant pot is attached to the hook.

According to one aspect of the invention there is provided apparatus for use in watering a plurality of plants comprising: a watering section having a water pipe, a valve controlling the flow of water and an actuator to actuate the valve, characterised by a cable in an endless loop or belt arranged to pass to one side of the station, hangers spaced apart along the cable and having hook means for engaging a plant pot and a portion to contact the actuator of the water valve, the hanger being movable between a first position when a plant pot is engaged with the hook means and in which the contact portion will contact the actuator, and a second position when a plant pot is not engaged with the hook means, in which the contact portion extends generally to the side of the cable so as not to contact the actuator. According to another aspect of the invention there is provided a hanger for use in such apparatus.

These and other features of the invention will be apparent from the following description.

In order that the invention may be well understood it will now be described with reference to the accompanying drawings, in which:

Figure 1 is a plan view of a plant conveying system in a greenhouse and including apparatus of the invention;

Figure 2 is an enlarged sectional view taken along line 2-2 of Figure 1;

Figure 3 is a sectional view taken along line 3-3 of Figure 2;

Figure 4 is an enlarged sectional view taken along line 4-4 of Figure 1;

Figure 5 is an enlarged perspective view of a portion of the cable support;

Figure 6 is an enlarged sectional view taken along line 6-6 of Figure 1;

Figure 7 is an enlarged view showing another hanger;

Figure 8 is an enlarged perspective view of the hanger of Figure 7;

Figure 9 is an enlarged sectional view taken along the lines of 9-9 of Figure 8.

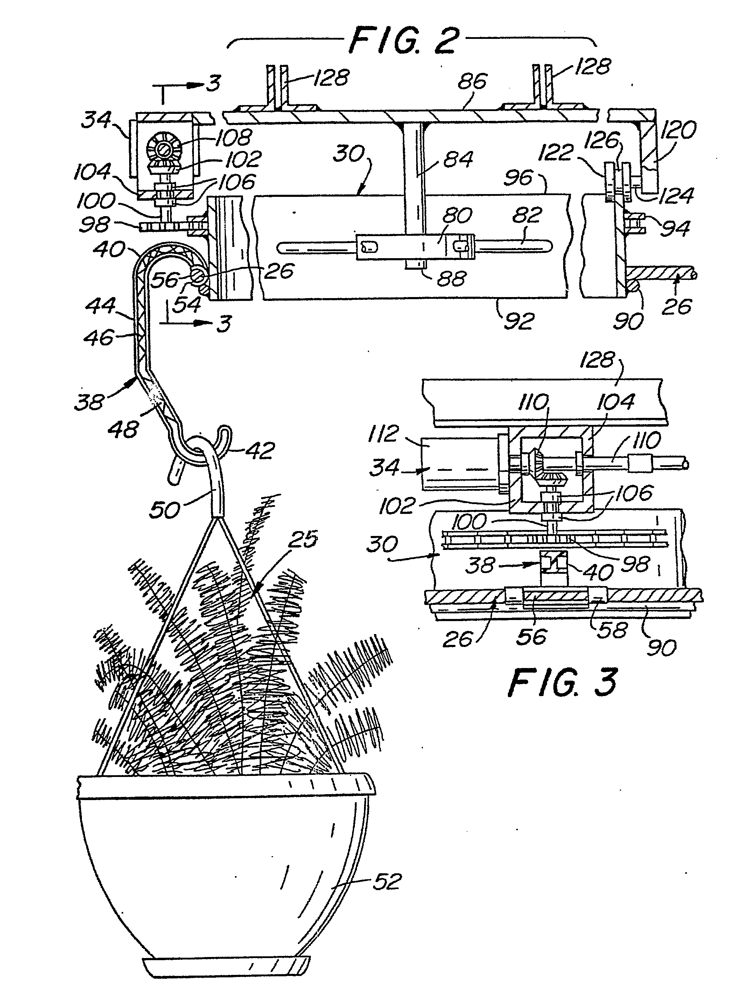

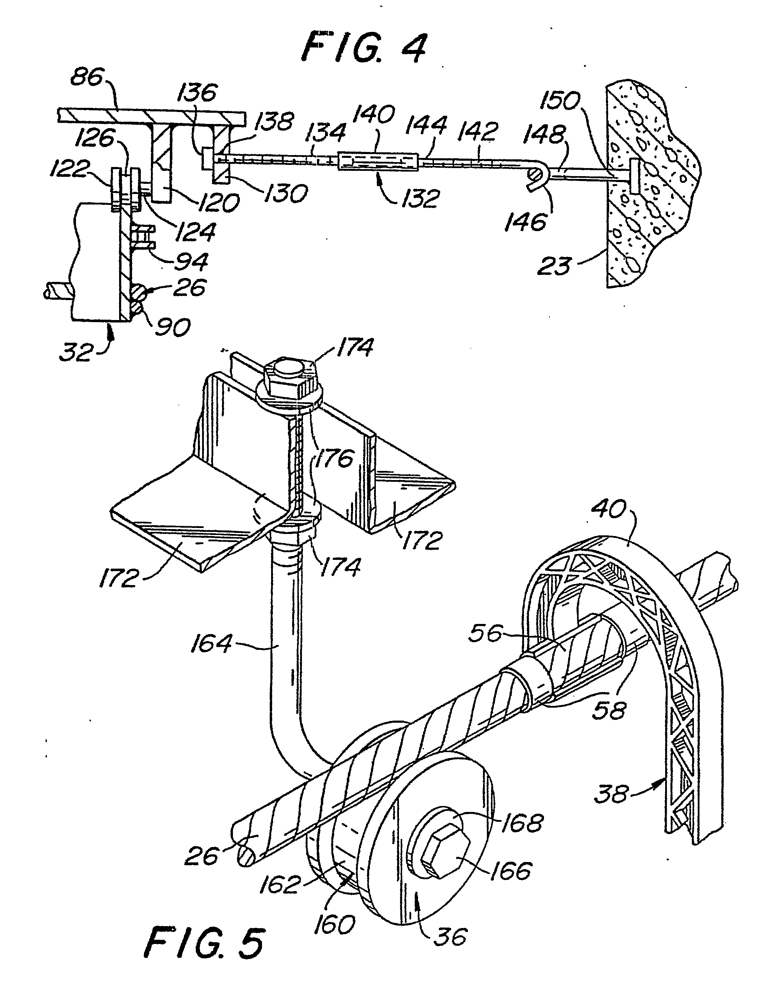

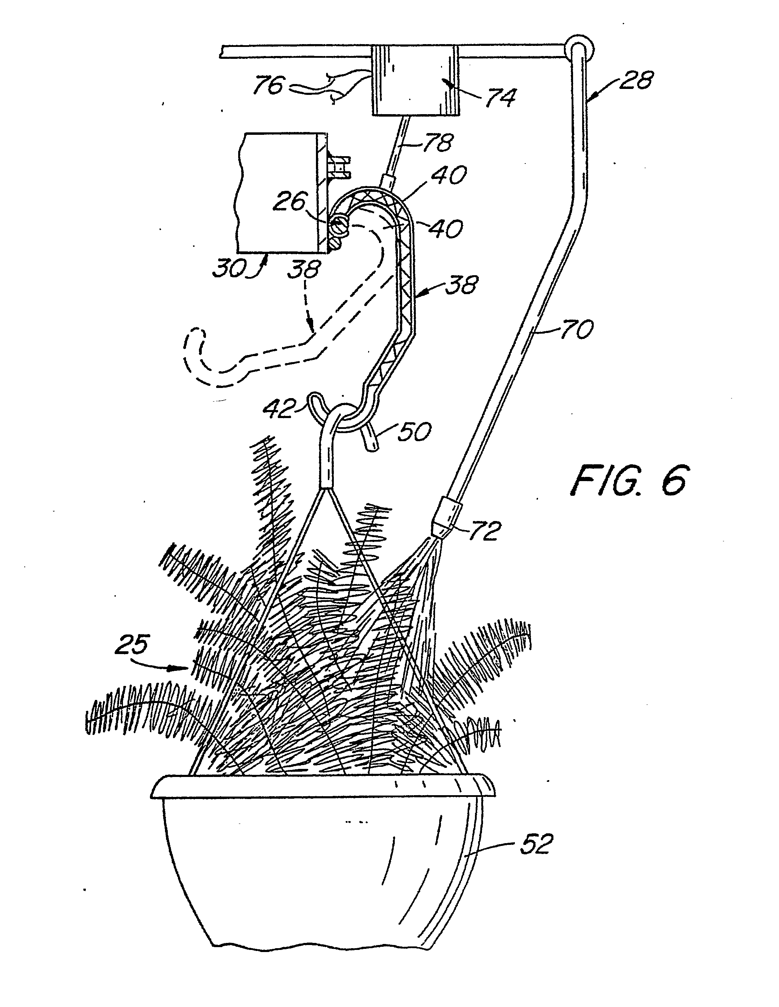

A plant watering conveyor system 20 comprises a plurality of plant conveying apparatus 22 (two of which are shown) in a building, such as a commercial greenhouse, only one wall of which 23 is shown. The greenhouse includes at least one roof portion (not shown) through which the light passes to reach at least a portion of each apparatus 22. Each apparatus 22 includes a conveyor loop or belt 24 on which plant hangers 38 are mounted at equally spaced apart locations. The loop or belt 24 is mounted horizontally at an elevated position so that light falls thereon. The conveyor loops 22 are driven by a common electric motor 112 and associated drive assembly. Each conveyor loop is arranged to carry plants 25 (Figure 2) past a respective watering station 28 where each plant is automatically watered. The loop or belt 24 is in the form of an endless steel cable 26 e.g. a braided steel cable of generally circular cross-section, or a multicore or twisted strand cable extending about a pair of cylindrical drums 30 and 32 spaced apart as required. The drum 30 is coupled to drive means 34, and the portion of the cable 26 spanning the two drums 30 and 32 is supported by spaced apart supports 36. As shown in Figures 2 and 6, the hanger 38 is a generally assymetrical C-shaped member including an arcuate upper leg portion 40, an arcuate lower leg portion 42 and an intermediate portion 44. The intermediate portion is formed by a pair of arms 46 and 48 extending at an obtuse angle with respect to each other. Arcuate portion 42 is curved upwards so that it forms a hook-like configuration for carrying the hook 50 of a conventional hanging basket or pot 52 holding plant 25. The upper arcuate portion 40 of the hanger 38 terminates in an arcuate recess 54 and the cable 26 is snap-fitted into the recess 54 through the open mouth 56. The mouth 56 extends sufficiently about the periphery of the recess 54 so that when the cable 26 is located therein the hanger 38 can pivot with respect to the longitudinal axis of the cable without falling off the cable. In order to prevent the hanger from slipping longitudinally on the cable 26 a pair of annular stops 58 is disposed on each side of the hanger 38 (best seen in Figure 5).

As can be seen in Figure 2 when a plant 25 is hung from hook portion 42 of the hanger 38 the weight on the hanger causes it to assume the first orientation wherein its arm portion 44 is disposed generally vertically with the arcuate end portion 40 extending a substantial height above the elevation of the plane of the cable loop. In this first orientation the portion 40 is arranged to contact a sensor mechanism 78 (to be described later) to effect the watering. When the plant 25 is removed from the hanger 38 the natural twist or torsion of the cable causes it to rotate or pivot the hanger inward with respect to the longitudinal axis of the cable 26 to the second orientation and which is shown by phantom lines in Figure 6. In this second orientation the upper arcuate arm portion 40 is disposed almost laterally of the cable 26 so as to avoid actuating the water sensor mechanism 78. Each hanger is formed of a material which is resistant to ultraviolet radiation. The material is preferably a plastic, most preferably glass filled polypropylene.

As best shown in Figure 6 each watering station 28 comprises of a watering conduit or spray tube 70 which is connected to a source of water supply (not shown) and having a nozzle 72 to be directed at the plant 25 carried to the watering station. The flow of water through conduit 70 and out of nozzle 72 is controlled by actuatable valve means 74 e.g. an electrically operated solenoid valve, including an electrical circuit and conductors 76. The valve is actuated by the movement of a contactor arm 78 to allow water to flow when the actuator arm 78 is tripped by the hanger arcuate portion 40. If the hanger 38 is empty (i.e. not carrying a plant) the hanger will be in the second orientation (shown in phantom in Figure 6) with the upper arcuate leg 40 of the hanger 38 disposed almost laterally of the plane of the cable loop 26 and below the free end of the solenoid actuator arm 78. Accordingly, the actuator arm is not tripped, the solenoid valve 74 remains closed and no water is enabled to pass through the conduit 70.

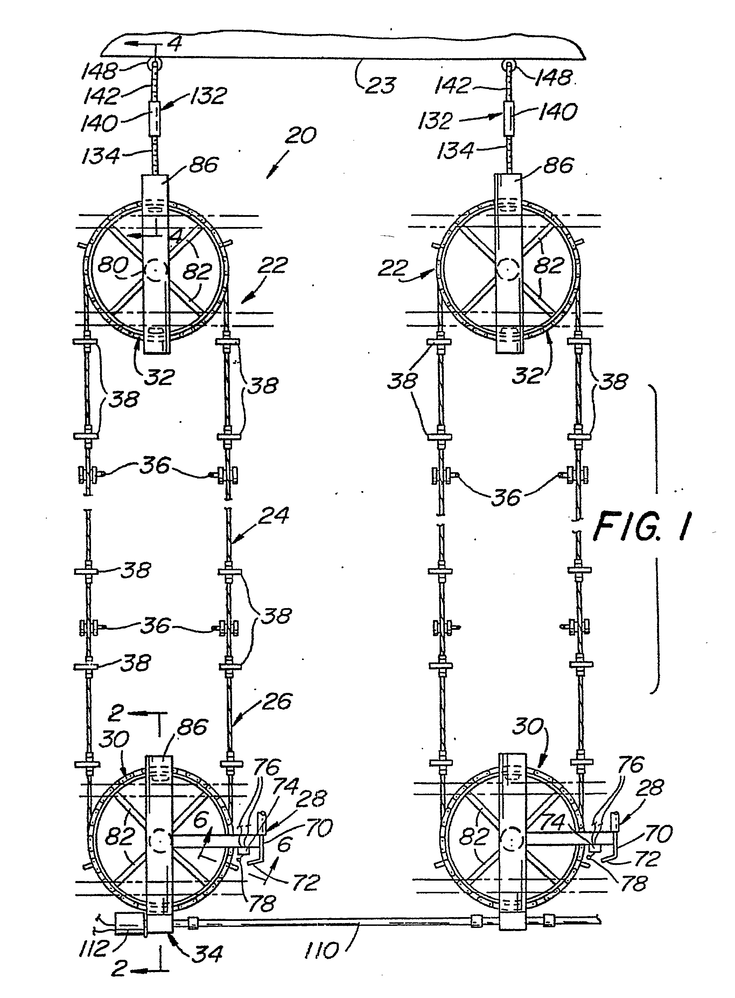

Referring now to Figures 1, 2, 3 and 4 the details of two drums 30 and 32 will now be described. The drum 30 is the drive drum and comprises a wheel having a central hub 80 and radial spokes 82. A stationary vertical support shaft 84 depends from a support plate or bracket 86 and the hub 80 of the drum is held on the free end 88 of the support shaft 84 which thus serves as an axle for the drum 30. An annular ledge 90 extends about the periphery of the drum 30 adjacent its lower edge 92 to keep the cable 26 on the drum. The drum 30 is driven by drive means 34 by a link chain 94 extending about its periphery adjacent its upper edge 96. The link-chain is welded in place and forms a set of gear teeth for engagement by the drive means gear means which comprises a horizontal spur gear 98 fixed on the lower end of a vertically disposed shaft 100. The upper end of the shaft 100 includes a bevel gear 102. The shaft 100 is journalled in a motor mounting bracket 104 via a pair of bushings 106. The bevel gear 102 is rotated by a cooperating bevel gear 108 which is mounted on a horizontally extending drive shaft 110 which is the rotary output shaft of the electrical motor 112 and which is coupled to each conveyor loop 24. At each conveyor apparatus a bevel gear 108 is located on the shaft 110 for rotation of the respective drum 30.

The motor housing 104 is mounted on plate 86 which includes a downwardly extending flange 120 (Figure 2) from which a roller 122 projects radially inward on a journalled shaft 124. The roller 122 includes an annular peripheral recess 126 to receive the top edge 96 of the drum 30 and so acts to hold the drum in position against the tension applied by the cable 26. The support plate 86 is mounted in the building by angle brackets 128 welded to the top of the support plate 86.

As can be seen in Figure 4 the cable 26 also extends about the periphery of drum 32 and rests on the ledge 90. In order to keep the cable loop 26 taut the support plate 86 of the drum 32 includes a downwardly extending flange 130 which receives one end of an adjustable turn buckle assembly 132. The turn buckle assembly 132 includes a threaded rod 134 terminating in a flanged end 136 and extending through an opening 138 in the support bracket flange 130 and the other end of rod 134 extends into a threaded sleeve 140 of assembly 132. A second threaded rod 142 includes a threaded end 144 which is located in the opposite end of the sleeve 140 and the other end of rod 142 is a hook 146 which engages an eyelet 148 of a pin 150 anchored in the wall 23. Rotation of the sleeve 140 brings the rod portions 134 and 142 of the turn buckle assembly closer together to tension the cable 26 via the support plate 86, the associated roller 122, and the drum 32.

Since the cable loop can extend for a substantial distance e.g. 33 metres (100 feet) or more, roller supports 36 (Figure 5) are present to support the cable between the drums. Each support 36 comprises a roller 160 mounted on a support rod 164 and having a groove 162 for receiving the cable 26 thereon. The roller 160 is held on the free end of the support rod 164 by a bolt head 166 and a washer 168. The support rod 164 includes a vertically extending section having a threaded end 170 received between the vertical flanges of a pair of right angle support bars 172 which are mounted by means (not shown) on the building. The threaded portion 170 is held in place by an opposed pair of nuts 174 and associated washers 176. In accordance with the commercial embodiment of the invention the drums 30 and 34 are each 30 inches (76.2 centimeters) in diameter, the cable is 0.25 inch (6.35 milimeters) in diameter and formed of galvanized steel and the motor is 0.25 horse-power.

The motor is arranged to be operated at two speeds so that when it operates at the slower speed the cable circulates at approximately 30 feet (9.14 meters) per minute while at the fast speed the cable circulates at approximately 60 feet (18.28 meters) per minute.

In use, plants are loaded and unloaded from the conveyor apparatus at either end thereof. During the loading and unloading of the apparatus, the drive is operated at the faster speed. As each hanger 38 reaches an end where the loading or unloading is to occur the person at that end either hangs a plant on the hanger 38 or removes a plant from the hanger. When a plant is hung on the hanger 38 it causes the hanger to rotate from the phantom line position shown in Figure 6 to a solid line position. Conversely, when plants are unloaded from the hangers each hanger pivots to the phantom line position shown in Figure 6. As each hanger 38 suspending a plant 25 reaches the watering station its arcuate portion 40 contacts the solenoid valve actuator arm 78 which causes the solenoid valve to open and spraying to commence, and the plant is watered. The watering action occurs without the conveyor being stopped (unless of course a longer period of watering is required).

In another embodiment, each solenoid valve includes a built-in delay so that when the valve is opened it remains open for a predetermined period of time, irrespective of the position of the actuator arm. In such a case watering the plant can continue even slightly after the actuator arm moves out of contact with the arcuate portion 40 of the hanger 38.

The apparatus of the invention applies two distinct advantages, namely the automatic watering of plants suspended from hangers on the conveyor while also ensuring that each plant is exposed uniformly to light in the greenhouse by virtue of its movement therethrough. With uniform light exposure and effective precise watering the plants are more certain to mature essentially at the same time, thereby enhancing the ability of the commercial grower to fulfill commitments for delivery of mature plants at a specified date.

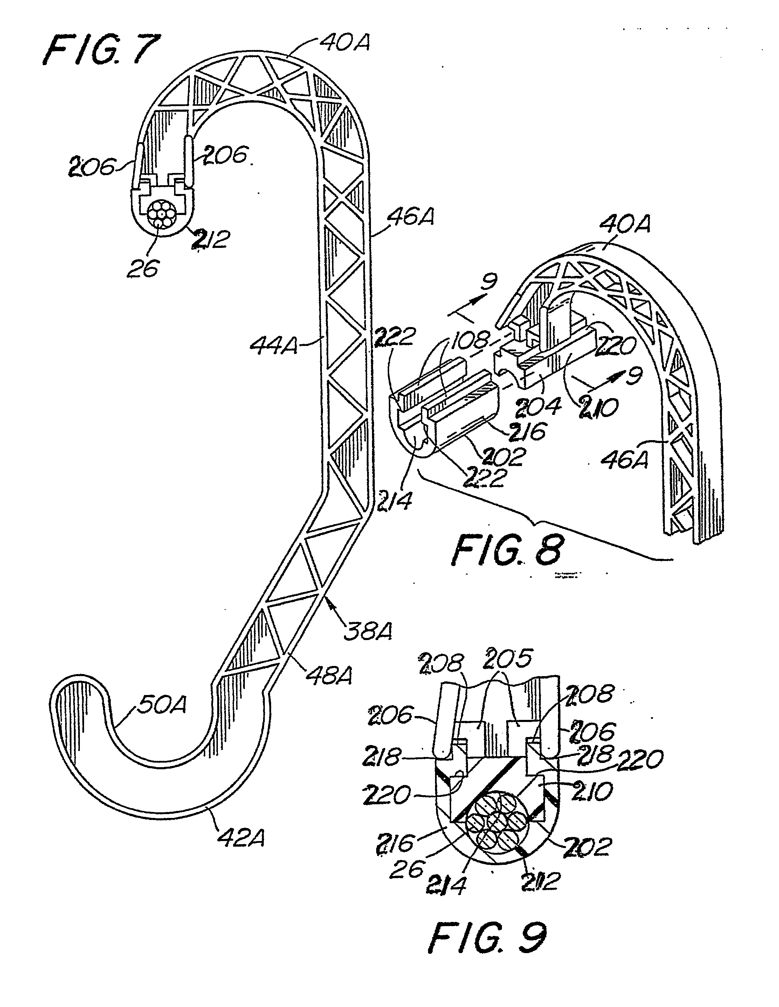

Another form of the hanger 38 (identified as 38a) is shown in Figures 7, 8, and 9. In this form of the hanger, the arcuate recess 54 is replaced by a locking clip 202, which is slidably received on base 204 that extends from arcuate portion 40a. As shown in Figure 8, the base 204 is integrally moulded to arcuate portion 40a and from which extends legs 205. The legs 205 are spaced from outer fingers 206 which also extend from arcuate portion 40a. A recess between each pair of legs 205 and 206 serves to receive ledges 208 extending upwardly from the clip 202. Also integrally moulded to the legs 205 is a lug 210 having an arcuate recess 212 corresponding to arcuate recess 54 and open mouth 56 of the hanger means shown in Figure 6. The recess 212 is generally semi-circular and is open in a downward direction as shown in Figure 9. When the locking clip 202 is slid into place, the recess 214 complements the recess 212 of the lug 210 to form a generally circular opening through which the cable 26 passes. In this way, the hanger 38a is positively but releasably locked on to the cable 26 but the hanger can pivot with respect to the cable. Because the clip 202 can be dimensioned with respect to the lug 210 to cause a relatively tight interfitting the stops 58 are not necessary.

The clip 202 outer wall 216 terminates in shoulders 218 defined by the ledges 208. The clip 202 can easily be slid upon the lug 210 so that the ledges 208 are received between legs 205 and fingers 206 of the base 204. The shoulder 220 in the base 204 engages complementary inner shoulder 222 on the clip 202. Thus the use of the clip overcomes variation in cable diameter and variation in cable diameter with changes in temperature.

## Claims

1. Apparatus for use in watering a plurality of plants comprising: a watering station (28) having a water pipe (70), a valve (74) controlling the flow of water and an actuator (78) to actuate the valve (74), characterised by a cable (26) in an endless loop or belt (24) arranged to pass to one side of the station (28), hangers (38, 38a) spaced apart along the cable (26) and having hook means (50, 50a) for engaging a plant pot (52) and a portion (40, 40a) to contact the actuator (78) of the water valve (74), the hanger (38, 38a) being movable between a first position when a plant pot (52) is engaged with the hook means (42), and in which the contact portion (40, 40a) will contact the actuator (78), and a second position when a plant pot is not engaged with the hook means (42), in which the contact portion (40, 40a) extends generally to the side of the cable (26) so as not to contact the actuator.

2. Apparatus according to Claim 1 characterised in that the cable (26) is a braided steel cable of generally circular cross-section and the torsion of the cable urges the hanger (38, 38a) engaged therewith towards the second position.

3. Apparatus according to Claim 1 or 2 characterised in that each hanger (38, 38a) comprises a generally asymmetric C-shaped member having a lower hook means (50, 50a) and an upper contact portion (40, 40a) which includes means (54, 212, 214) engaging the cable (26).

4. Apparatus according to Claim 3 characterised in that the hanger (38, 38a) includes means (58, 202, 210) to prevent the hanger from moving longitudinally along the cable (26).

5. Apparatus according to Claim 4 characterised in that the hanger means (38, 38a) is formed of a plastics material resistant to ultraviolet radiation, e.g. glass filled polypropylene.

6. Apparatus according to any preceding Claim characterised in that the contact portion (40, 40a) of each hanger (38, 38a) is arranged to cause the actuator (78) to cause water to be applied to the plant (25), optionally for a predetermined time interval, with the belt (24) continuing to travel.

7. Apparatus according to any preceding Claim characterised in that the belt (24) is mounted horizontally at an elevated position in a building (23), e.g. a greenhouse, so that light will reach the plants (25) in the pots (52) moving on the belt (24).

8. Apparatus according to Claim 7 characterised in that roller means (36) are secured at spaced apart locations to a wall of the building to support the cable (26).

9. Apparatus according to any preceding Claim characterised in that the belt (24) is arranged to be moved at different speeds and at the slower speed adjacent the watering station (28).

10. Apparatus according to any preceding Claim characterised in that there is a plurality of belts (24) each with a respective watering station (28), each belt (24) extending between a drive drum (30) and a passive drum (32), drive means (34) extending between each of the drive drums (30) and a common rotary shaft (110) of a motor (112).

11. Apparatus according to Claim 10 characterised in that each drive drum (30) includes a link chain (94) in engagement with a spur gear (98) at one end of a shaft (100), the other end of which includes a bevel gear (102) rotated by a bevel gear (108) mounted on the rotary shaft (110).

12. A hanger (38, 38a) for use in apparatus according to any preceding Claim characterised in that the hanger (38, 38a) comprises a generally asymmetric C-shaped member having an upper leg portion (40, 40a) defining an actuator contact portion, means (54, 212, 214) for engaging a cable (26) and a lower leg portion (42, 42a) defining a hook for holding a plant pot (52), the hanger when engaged with the cable (26) being arranged to be movable between a first position when a plant pot (57) is engaged with the hook (42, 42a), in which the upper portion (40, 40a) will contact an actuator (78) arranged to actuate a valve (74) controlling the flow of water from a water pipe and thereby water the plant, the hanger (38, 38a) being movable to a second position when a plant pot (52) is not engaged with the hook means (42, 42a), in which the upper leg portion (40, 40a) extends generally to one side of the cable (26) so as not to contact the actuator (78).

13. A hanger according to Claim 12 characterised in that the means for engaging the cable comprises a recess (54) on the upper leg portion (40) and in that annular stops (58) are present disposed one on each side of the recess (54).

14. A hanger according to Claim 12 characterised in that the upper leg portion (40a) includes a recess (214), a clip (202) being attached to the upper leg portion (40a) and including a further recess (212), the two recesses (212, 214) defining an opening to receive the cable (26).

**Patentansprüche**

1. Vorrichtung zur Bewässerung mehrerer Pflanzen, bestehend aus: einer Bewässerungsstation (28) mit einem Wasserschlauch (70), einem Ventil (74), das den Wasserdurchsatz reguliert und einer Schaltvorrichtung (78) zur Bedienung des Ventils (74), dadurch gekennzeichnet, daß ein Seil (26) in einer Endlosschleife oder ein Riemen (24) so angeordnet ist, daß an einer Seite der Station (28) auf dem Seil (26) verteilte Aufhängungen mit Hakenvorrichtungen (50, 50a) zur Aufnahme von Pflanzen (52) und einen Teil (40, 40a) zum Berühren der Schaltvorrichtung (78) des Wasserventils (74) verläuft. Die Aufhängung (38, 38a) ist zwischen einer ersten Position, in der eine Pflanze (52) an einen Haken (42) gehängt wird, beweglich, in der der Berührungsteil (40, 40a) die Schaltvorrichtung (78) berührt und einer zweiten Position, in der keine Pflanze an den Haken (42) gehängt wird und in der sich der Berührungsteil (40, 40a) allgemein seitlich vom Seil (26) erstreckt, um die Schaltvorrichtung nicht zu berühren.

2. Vorrichtung nach Anspruch 1, dadurch gekennzeichnet, daß ein Seil (26) ein geflochtenes Stahlseil mit allgemein rundem Querschnitt ist, dessen Windung die daran befestigte Aufhängung zur zweiten Position drückt.

3. Vorrichtung nach Anspruch 1 oder 2, dadurch gekennzeichnet, daß jede Aufhängung (38, 38a) einen allgemein asymmetrischen C-förmigen Teil mit einem niedrigeren Haken (50, 50a) und einem oberen Berührungsteil (40, 40a) mit einer Vorrichtung (54, 212, 214) zum Einlegen des Seils (26) hat.

4. Vorrichtung nach Anspruch 3, dadurch gekennzeichnet, daß die Aufhängung (38, 38a) ein Mittel (58, 202, 210) hat, um die Bewegung der Aufhängung in Längsrichtung auf dem Seil (26) zu verhindern.

5. Vorrichtung nach Anspruch 4, dadurch gekennzeichnet, daß die Aufhängung (38, 38a) aus gegen ultraviolette Strahlung beständigem Kunststoff, d.h. glasfaserverstärktem Polypropylen gefertigt ist.

6. Vorrichtung nach den vorstehenden Ansprüchen, dadurch gekennzeichnet, daß der Berührungsteil (40, 40a) einer jeden Aufhängung (38, 38a) als Sonderausführung so angeordnet ist, daß die Schaltvorrichtung (78) für eine bestimmte Dauer Wasser auf die Pflanze (25) gießt, wobei der Riemen (24) weiterläuft.

7. Vorrichtung nach den vorstehenden Ansprüchen, dadurch gekennzeichnet, daß der Riemen (24) waagerecht an einer erhöhten Stelle des Gebäudes (23) angebracht ist, d.h. in einem Gewächshaus, so daß Licht auf die Pflanzen (25) in Töpfen (52) fällt, die sich am Riemen (24) fortbewegen.

8. Vorrichtung nach Anspruch 7, dadurch gekennzeichnet, daß Rollen im Abstand voneinander an einer Wand des Gebäudes angebracht sind, um das Seil (26) zu stützen.

9. Vorrichtung nach den vorstehenden Ansprüchen, dadurch gekennzeichnet, daß der Riemen (24) so angeordnet ist, daß er mit verschiedenen Geschwindigkeiten und der niedrigeren Geschwindigkeit neben die Bewässerungsstation (28) bewegt werden kann.

10. Vorrichtung nach den vorstehenden Ansprüchen, dadurch gekennzeichnet, daß sie mehrere Riemen (24) hat, je mit einer Bewässerungsstation (28) und daß jeder Riemen (24) zwischen einer Antriebstrommel (30), und einer angetriebenen Trommel verläuft, wobei sich das Antriebsmittel (34) zwischen jeder Antriebstrommel (30) und einer gemeinsamen drehbaren Welle (110) eines Motors (112) befindet.

11. Vorrichtung nach Anspruch 10, dadurch gekennzeichnet, daß jede Antriebstrommel (30) eine Gliederkette (94) hat, die in ein am Ende der Welle (100) befindliches Stirnrad (98) greift, deren anderes Ende mit einem Kegelrad (102) versehen ist, das durch ein Kegelrad auf der sich drehenden Welle (110) gedreht wird.

12. Aufhängung (38, 38a) zum Gebrauch in einer Vorrichtung nach den vorstehenden Ansprüchen, dadurch gekennzeichnet, daß eine Aufhängung (38, 38a) die aus einem allgemein asymmetrischen C-förmigen Teil mit einem oberen Schenkelteil (40, 40a) besteht, der den Berührungsteil der Schaltvorrichtung, die Vorrichtungen (54, 212, 214) zur Aufnahme des Seils (26) und einen niedrigeren Schenkelteil (42, 42a) umgrenzt, der einen Haken zum Halten des Topfes (52) bildet, wobei die Aufhängung bei Aufnahme des Seils (26) so angebracht ist, daß sie sich zwischen der ersten Position bei Aufnahme eines Topfes (57) durch den Haken (42, 42a) befindet, wobei der obere Teil die Schaltvorrichtung (78), die das Ventil (74) zur Überwachung des Wasserdurchsatzes von einem Schlauch bedient und dadurch die Pflanze bewässert und einer zweiten Position, in der kein Topf (52) vom Haken (42, 42a) aufgenommen wird und in der sich der obere Schenkelteil (40, 40a) allgemein seitlich vom Seil erstreckt, um die Schaltvorrichtung (78) nicht zu berühren.

13. Aufhängung nach Anspruch 12, dadurch gekennzeichnet, daß die Vorrichtung zur Aufnahme des Seils eine Aussparung (54) am oberen Schenkelteil (40) hat und daß kreisförmige Anschläge (58) an jeder Seite der Aussparung (54) angeordnet sind.

14. Aufhängung nach Anspruch 12, dadurch gekennzeichnet, daß der obere Schenkelteil (40a) eine Aussparung (214) einschließt, wobei eine Klemme (202) am oberen Schenkelteil (40a) angebracht wird und eine weitere Aussparung (212), wobei beide Aussparungen (212, 214) eine Öffnung zur Aufnahme des Seils (26) bilden.

## Revendications

1. Appareil utilisé pour l'arrosage d'une série de plantes et comportant : un poste d'arrosage (28) muni d'un tuyau d'eau (70), une valve (74) contrôlant le débit de l'eau et un actionneur (78) pour actionner la valve (74), caractérisé par un câble (26) sous forme de câble sans fin ou bande transporteuse (24) disposée de manière à passer d'un côté du poste d'arrosage (28), des éléments-crochets (38, 38a) espacés tout le long du câble (26) et munis de moyens de suspension (50, 50a) pour accrocher un pot de fleurs (52) et une partie arquée (40, 40a) pour entrer en contact avec l'actionneur (78) de la valve d'eau (74), le crochet (38, 38a) se déplaçant d'une première position quand le pot de fleurs (52) est accroché aux moyens de suspension (42), et que la partie arquée (40, 40a) entre en contact avec l'actionneur (78), vers une deuxième position quand un pot de fleurs n'est pas accroché aux moyens de suspension (42), et que la partie arquée (40, 40a) se place généralement sur le côté du câble (26) empêchant ainsi le contact avec l'actionneur.

2. Appareil qui, selon la revendication 1, est caractérisé en ce que le câble (26) est fait d'acier tressé, généralement de forme transversale circulaire, et que la torsion du câble pousse le crochet (38, 38a) qui y est suspendu, vers la deuxième position.

3. Appareil qui, selon les revendications 1 ou 2, est caractérisé en ce que chaque crochet (38, 38a) comporte généralement un élément asymétrique en forme de C muni de moyens de suspension (50, 50a) et une partie supérieure de contact (40, 40a) qui inclut des moyens (54, 212, 214) engageant le câble (26).

4. Appareil qui, selon la revendication 3, est caractérisé en ce que le crochet (38, 38a) comporte des moyens (58, 202, 210) d'empêcher le crochet de se déplacer longitudinalement le long du câble (26).

5. Appareil qui, selon la revendication 4, est caractérisé en ce que les moyens de suspension (38, 38a) sont conçus à partir d'un matériau en plastique résistant aux rayons ultra-violets, par exemple du polypropylène rempli de verre.

6. Appareil qui, selon toute revendication précédente, est caractérisé en ce que la partie-contact (40, 40a) de chaque crochet (38, 38a) est disposée de manière à faire fonctionner l'actionneur (78), ce qui provoque l'arrosage de la plante (25), de manière facultative pour une période de temps prédéterminée, la bande transporteuse (24) poursuivant son mouvement rotatif.

7. Appareil qui, selon toute revendication précédente, est caractérisé en ce que la bande transporteuse (24) est montée horizontalement en une position élevée, dans un bâtiment (23), par exemple une serre, pour que la lumière puisse atteindre les plantes (25) dans les pots (52) qui se meuvent le long de la bande transporteuse (24).

8. Appareil qui, selon la revendication 7, est caractérisé en ce que des roulettes (36) sont fixées à des endroits distants l'un de l'autre, à un mur du bâtiment, pour supporter le câble (26).

9. Appareil qui, selon toute revendication précédente, est caractérisé en ce que la bande transporteuse (24) est disposée de manière à pouvoir se déplacer à différentes vitesses et, à la vitesse inférieure, est adjacente au poste d'arrosage (28).

10. Appareil qui, selon toute revendication précédente, est caractérisé en ce qu'il consiste en une série de bandes transporteuses (24) chacune ayant son poste d'arrosage (28) respectif, chaque bande (24) étant tendue entre un tambour d'entraînement (30) et un tambour fixe (32), des moyens d'entraînement (34) reliant chaque tambour d'entraînement (30) à l'arbre de rotation commun (110) d'un moteur (112).

11. Appareil qui, selon la revendication 10, est caractérisé en ce que chacun des tambours d'entraînement (30) inclut une chaîne à maillons (94) engagée dans un engrenage denté (98) à une extrémité de l'arbre (100), l'autre extrémité étant munie d'une roue conique (102) mue par une roue conique (108) montée sur l'arbre de rotation (110).

12. Elément-crochet (38, 38a) utilisé dans l'appareil selon toute revendication précédente caractérisé en ce que le crochet (38, 38a) comporte généralement un élément asymétrique conçu en forme de C muni d'une partie supérieure arquée (40, 40a) agissant comme point de contact d'un actionneur, des moyens (54, 212, 214) servant à engager le câble (26) et une partie inférieure arquée (42, 42a) formant un crochet pour soutenir un pot de fleurs (52), le crochet, une fois engagé avec le câble (26), étant disposé de manière à pouvoir pivoter d'une première position quand un pot de fleurs (57) est suspendu au crochet (42, 42a) et la partie supérieure (40, 40a) entrant alors en contact avec l'actionneur (78) disposé de manière à actionner une valve (74) contrôlant le débit d'eau à partir d'un tuyau d'eau et, de ce fait, à arroser la plante, le crochet (38, 38a) pouvant pivoter vers une deuxième position quand un pot de fleurs (52) n'est pas accroché aux moyens de suspension (42, 42a), dont la partie supérieure (40, 40a) se déplace généralement vers un côté du câble (26) pour ne pas entrer en contact avec l'actionneur (78).

13. Crochet qui, selon la revendication 12, est caractérisé en ce que les moyens d'engager le câble comprennent un renfoncement (54) sur la partie supérieure arquée (40) et en ce que des anneaux d'arrêt (58) sont placés de chaque côté du renfoncement (54).

14. Crochet qui, selon la revendication 12, est caractérisé en ce que la partie supérieure (40a) comprend un renfoncement (214), une cale (202) étant attachée à la partie supérieure (40a) et comprenant un autre renfoncement (212), les deux renfoncements (212, 214) déterminant une ouverture pour recevoir le câble (26).

*FIG. I*

FIG. 2

FIG. 3

# FIG. 4

# FIG. 5

EP 0 220 348 B1

FIG. 6

FIG. 7

FIG. 8

FIG. 9